(19) Europäisches Patentamt
European Patent Office
Office européen des brevets

(11) EP 4 763 319 A1

(12) **EUROPEAN PATENT APPLICATION**
published in accordance with Art. 153(4) EPC

(43) Date of publication:
**24.06.2026 Bulletin 2026/26**

(21) Application number: **24854084.1**

(22) Date of filing: **04.07.2024**

(51) International Patent Classification (IPC):
***B01D 71/52*** (2006.01) ***C08G 65/48*** (2006.01)

(52) Cooperative Patent Classification (CPC):
**B01D 71/52; C08G 65/48**

(86) International application number:
**PCT/JP2024/024171**

(87) International publication number:
**WO 2025/037493 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.08.2023 JP 2023132912**

(71) Applicant: **Toyobo Co., Ltd.**
**Kita-ku**
**Osaka-shi, Osaka 530-0001 (JP)**

(72) Inventors:
- **OKAME, Takashi**
  **Otsu-shi, Shiga 520-0292 (JP)**
- **SHIBUYA, Masafumi**
  **Otsu-shi, Shiga 520-0292 (JP)**

(74) Representative: **Vossius & Partner Patentanwälte Rechtsanwälte mbB**
**Siebertstraße 3**
**81675 München (DE)**

(54) **MODIFIED POLYPHENYLENEOXIDE SEPARATION MEMBRANE AND METHOD FOR PRODUCING SAME**

(57) The objective of the present invention is to provide a separation membrane having excellent organic solvent resistance, acid resistance and base resistance. The present invention relates to a modified polyphenylene oxide separation membrane wherein one or more benzylic positions at the 2- and/or 6-positions of a polyphenylene oxide precursor membrane are substituted with a halogeno group, and all or a part of the halogeno group is substituted with an alkanolamine. Also, the present invention relates to the method for producing a modified polyphenylene oxide separation membrane, the method comprising the step of immersing a precursor membrane composed of a halogenated polyphenylene oxide in a reaction solution to substitute all or a part of a halogeno group at a benzylic position at the 2- and/or 6-positions of the halogenated polyphenylene oxide with an alkanolamine, wherein the reaction solution is prepared by dissolving the alkanolamine in an organic solvent, and the precursor membrane is insoluble in the organic solvent.

[Figure 1]

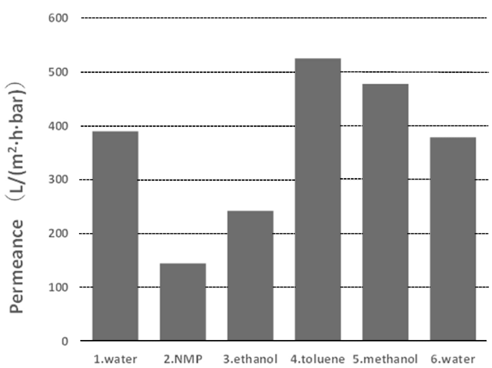


EP 4 763 319 A1

## Description

TECHNICAL FIELD

The present invention relates to a separation membrane that enables stable separation in an organic solvent and to a method for producing the separation membrane.

BACKGROUND ART

A membrane separation process offers the advantage of significantly reducing the energy required for separation in comparison with distillation, since a membrane separation process does not involve a phase transition. In addition, since a membrane separation process does not require heating, the process is well-suited for purifying a substance prone to thermal degradation. Thus, membrane technology is applied across a wide range of industrial fields such as seawater desalination, drinking water treatment, wastewater treatment, and blood purification membrane. The medium for conventional membrane separation is water in many cases.

A membrane separation process using an organic solvent as a medium is indispensable in industrial fields such as chemical, pharmaceutical and petrochemical industries. A distillation process is employed in many cases. Distillation is a highly reliable technology but causes social issues. For example, distillation requires significant energy and results in substantial carbon dioxide emissions.

It is needed to develop a nanofiltration membrane and a reverse osmosis membrane suitable for stable filtration operation in an organic solvent for a long time in order to apply a membrane separation method in a separation process such as purification by fractionation of low-molecular-weight substances and fractionation purification of an organic solvent itself using an organic solvent as the medium.

A separation membrane composed of polyphenylene oxide (PPO) or a derivative thereof is relatively inexpensive and possesses high mechanical strength, alkali resistance and acid resistance. In addition, since PPO or a derivative thereof has resistance to a non-protonic polar solvent such as N-methyl-2-pyrrolidone (NMP) and dimethyl sulfoxide (DMSO), PPO or a derivative thereof is considered to possess excellent potential as a membrane material applicable to a filtration process using such a pure organic solvent as a medium as well as to an organic solvent filtration process involving an alkali or an acid.

For example, Patent document 1 discloses a method for producing a separation membrane and a composite membrane using PPO, and discloses that these membranes are insoluble in NMP and DMSO at atmospheric temperature and exhibit resistance to the solvents.

PRIOR ART DOCUMENT

PATENT DOCUMENT

Patent document 1: JP 5578300 B

DISCLOSURE OF THE INVENTION

PROBLEMS TO BE SOLVED BY THE INVENTION

A PPO membrane is resistant to a non-protonic polar solvent such as NMP and DMSO, since the polymer has low polarity. However, there is a problem that PPO is soluble in a non-polar solvent such as toluene and benzene due to its similar Hansen solubility parameters. In addition, there is a problem that PPO exhibits insufficient solvent resistance for use as an organic solvent filtration membrane. For example, PPO can dissolve in NMP at relatively high-temperature.

The objective of the present invention is to provide a separation membrane having excellent organic solvent resistance, acid resistance and base resistance under the above-described circumstances.

MEANS FOR SOLVING THE PROBLEMS

The inventors of the present invention conducted intensive studies in order to solve the above-described problems. As a result, the inventors completed the present invention by finding the following matters:

(1) an alkanolamine can be introduced onto a PPO side chain in high density by using a BrPPO membrane prepared by halogenating the benzylic position of a PPO membrane as a precursor and simply immersing the BrPPO membrane in an alkanolamine solution,

(2) the produced membrane has the excellent resistance to almost all organic solvents in addition to water,
(3) the membrane is excellent in wettability to water even after drying due to high hydrophilicity of the alkanolamine side chain thereof,
(4) the solvent-resistant membrane exhibiting reduced shrinkage, lower permeance degradation and less embrittlement (reduced elongation) caused by crosslinking can be easily produced in comparison with conventional methods of enhancing solvent resistance of a polymer membrane by covalent crosslinking.

The present invention is hereinafter described.

[1] A modified polyphenylene oxide separation membrane,

wherein one or more benzylic positions at the 2- and/or 6-positions of a polyphenylene oxide precursor membrane are substituted with a halogeno group, and
all or a part of the halogeno group is substituted with an alkanolamine.
In other words, the modified polyphenylene oxide separation membrane of the present invention is characterized in that all or a part of the benzylic positions at the 2- and/or 6-positions is substituted with an alkanolamine.

[2] The modified polyphenylene oxide separation membrane according to the above [1], wherein the halogeno group is bromo.
[3] The modified polyphenylene oxide separation membrane according to the above [1] or [2], wherein the alkanolamine is a monoethanolamine represented by the chemical formula (3):

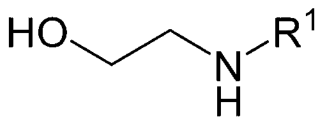

(3)

wherein $R^1$ is a hydrogen atom or a methyl group.
[4] The modified polyphenylene oxide separation membrane according to any one of the above [1] to [3], wherein all or a part of the halogeno group is substituted with the alkanolamine and a polyfunctional amine.
[5] The modified polyphenylene oxide separation membrane according to the above [4], wherein the polyfunctional amine is one or more selected from the group consisting of an alicyclic diamine, an aliphatic triamine and an aromatic diamine.
[6] A method for producing a modified polyphenylene oxide separation membrane,

the method comprising the step of immersing a precursor membrane composed of a halogenated polyphenylene oxide in a reaction solution to substitute all or a part of a halogeno group at a benzylic position at the 2- and/or 6-position of the halogenated polyphenylene oxide with an alkanolamine,
wherein the reaction solution is prepared by dissolving the alkanolamine in an organic solvent, and
the precursor membrane is insoluble in the organic solvent.

[7] The method for producing a modified polyphenylene oxide separation membrane according to the above [6], wherein

the precursor membrane composed of the halogenated polyphenylene oxide is immersed in the reaction solution to substitute all or a part of the halogeno group at the benzylic position at the 2- and/or 6-positions of the halogenated polyphenylene oxide with the alkanolamine and a polyfunctional amine,
the reaction solution is prepared by dissolving the alkanolamine and the polyfunctional amine in the organic solvent, and
the precursor membrane is insoluble in the organic solvent.

[8] The method for producing a modified polyphenylene oxide separation membrane according to the above [6] or [7], wherein the organic solvent is methanol or acetonitrile.

EFFECT OF THE INVENTION

The modified PPO membrane of the present invention produced by introducing an alkanolamine at the benzylic position has excellent solvent resistance and chemical resistance, particularly alkali resistance and acid resistance, and

thus enables stable separation in various solvents such as a protic polar solvent, a non-protic polar solvent and a non-polar solvent under both acidic and basic conditions. An example of a protic polar solvent includes methanol, ethanol and 2-propanol. An example of a non-protic polar solvent includes NMP, DMSO and dimethylformamide (DMF). An example of a non-polar solvent includes toluene and hexane. In addition, the membrane of the present invention is excellent in the wettability to water due to high hydrophilicity by the hydroxy group in the alkanolamine side chain, and the modified PPO membrane can preferably be used as separation membrane such as an ultrafiltration membrane and a nanofiltration membrane in an organic solvent by itself.

BRIEF DESCRIPTION OF THE DRAWINGS

[Figure 1] Figure 1 shows the permeance of various solvents through the separation membrane of the present invention.

MODE FOR CARRYING OUT THE INVENTION

The separation membrane of the present invention is produced using polyphenylene oxide (PPO, poly-2,6-dimethyl-1,4-phenylene oxide) as a raw material. The chemical structure of PPO is represented by the following chemical formula (1).

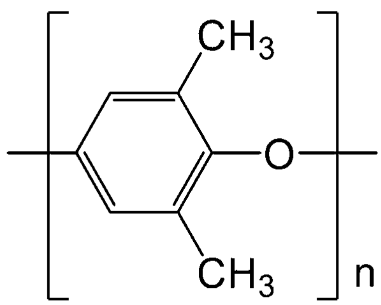

(1)

wherein n is an integer of 1 or more, preferably an integer of 2 or more, and more preferably an integer of 40 or more and 5000 or less.

The weight-average molecular weight of the PPO is preferably 5,000 or more and 500,000 or less from the viewpoint of sufficiently increasing the viscosity of a membrane-forming solution to improve the coating processability and spinnability and to ensure the membrane strength in the present invention.

The benzylic hydrogen atom on the methyl group at the 2- and/or 6-positions of PPO is preferably halogenated by a conventional method in the present invention to modify the PPO by an alkanolamine or the like as described later. An example of the halogeno group includes fluoro, chloro, bromo and/or iodo, and bromo is preferably used due to high leaving-group ability, a low cost and excellent handling property.

A part of the benzene ring at the 3- and/or 5-positions of PPO may be substituted with a halogeno group during the process of halogenating the benzylic position of the PPO in the present invention. However, selective halogenation at the benzylic position is preferred by adjusting conventional reaction conditions, since the halogeno group on the benzene ring does not undergo an $S_N2$-type nucleophilic substitution reaction. Specifically, carbon tetrachloride or chlorobenzene is preferably used as the reaction solvent, since the concentration of the halogen in the reaction system can be kept low by using such a solvent having low solubility for the halogen and thus the benzylic position is preferentially halogenated. For example, it is known that when a polar solvent such as acetonitrile is used, only the benzene ring is halogenated. Carbon tetrachloride is preferably avoided, and chlorobenzene is preferably used, due to ease of handling.

A publicly known halogenating agent such as a halogen molecule and an N-halosuccinimide may be used as a halogen source in the present invention. The halogenation reaction is preferably carried out under an inert atmosphere such as argon and nitrogen at the reaction temperature of 110°C or higher for 3 hours or more. When the reaction temperature is higher, the selectivity for halogenation at the benzylic position increases. The reaction is more preferably carried out at 115°C or higher and less than 135°C, since a side reaction to cross-link the polymer may occur at the temperature of 140°C or higher.

The halogenated PPO such as BrPPO, which serves as the precursor for forming a PPO-based precursor membrane, can be produced by adding methanol, ethanol, acetone or the like to the reaction solution after completion of the reaction to precipitate the polymer, washing the polymer with a similar solvent, and drying the polymer in the present invention. Methanol is more preferably used as the solvent.

For example, the degree of benzylic halogenation of the halogenated PPO can be determined by nuclear

magnetic resonance (NMR) spectroscopy using deuterated chloroform as the solvent in the present invention. The chemical structure of the general halogenated PPO is represented by the chemical formula (2). Various unit structures $n_i$ (i = 1 to k) are generated depending on the degrees of halogenation at the benzene ring and at the benzylic positions, and the ratio of each unit structure can be determined on the basis of characteristic NMR peaks. For example, the detailed unit structure can be also identified using heteronuclear single quantum coherence (HSQC) spectroscopy.

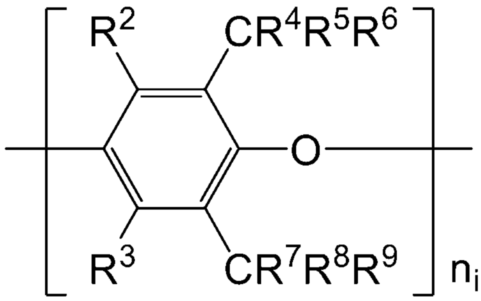

(2)

wherein

$R^2$ to $R^9$ are respectively a halogeno group or a hydrogen atom,
$R^2$ and $R^3$ are a halogeno group on the benzene ring,
1 or more of $R^4$ to $R^9$ are a halogeno group at the benzylic position,
$n_i$ is a mole fraction of k- kinds of unit structures identified by NMR,
i = 1 to k wherein k is an integer of 2 or more,
$n_i$ is 0 or more and 1 or less.

The degree of halogenation, i.e. DBr, is defined as the average number of the halogeno group at the benzylic position per unit structure and is represented by the following mathematical formula (1) in the present invention. Since PPO has 2 methyl groups at the 2-position and/or the 6-position in the unit structure and the number of benzylic hydrogen that can be substituted is 6, the value of DBr may be included in the range of 0 to 6.0. One hydrogen atom of each methyl group is substituted with a halogen atom in most cases, and there can also be a certain proportion of cases in which two hydrogen atoms are substituted by halogen atoms, to the inventors' knowledge. On the one hand, no cases have been observed in which three hydrogen atoms of a methyl group are substituted by halogen atoms.

$$DBr = \sum_{i=1}^{k} n_i N_{i_B_z B_r} \quad (1)$$

wherein $N_{i_BzBr}$ is the number of the halogeno group at the benzylic position in the unit structure i.

The average number of the halogeno group that substitutes the hydrogen atom on the benzene ring per unit structure is represented by the following mathematical formula (2).

$$DBr_2 = \sum_{i=1}^{k} n_i N_{i_A_r B_r} \quad (2)$$

wherein $N_{i_ArBr}$ is the number of the halogeno group on the benzene ring in the unit structure i.

The degree of halogenation at the benzylic position, i.e. DBr, described above is preferably 0.5 or more and 2.0 or less in the present invention. When the degree is excessively low, sufficient solvent resistance and wettability (hydrophilicity) to water of the membrane may not be obtained due to insufficient modification of the side chain with an alkanolamine and a polyfunctional amine described later in some cases. Conversely, when the degree is excessively high, economic rationality may be decreased by excessive consumption of halogen, and a side reaction such as crosslinking may also occur during the reaction process, in some cases.

The halogenation degree on the benzene ring, i.e. $DBr_2$, is not particularly restricted and is preferably 0 or more and 1.0 or less in the present invention. When the degree is excessively high, the degree of benzylic halogenation, i.e. DBr, is relatively decreased, halogen consumption is excessively increased, and/or sufficient solvent resistance may not be obtained, in some cases. Unit structure halogenated at both the benzene ring and the benzylic position may be present depending on the reaction condition.

A membrane is then formed using the produced halogenated PPO polymer. The membrane architecture may be arbitrarily selected. For example, the membrane may be a flat-sheet or a hollow fiber. Since the halogenated PPO can be dissolved in NMP, DMF or the like, the membrane is preferably formed by applying a solution processing. Phase separation can be controlled by adding a specific amount of a nonsolvent to a good solvent such as NMP in the process. For example, polyethylene glycol, glycerol, polypropylene glycol, a nonionic surfactant, an ionic surfactant or the like may be appropriately selected and added.

The halogeno group of the halogenated PPO cannot be substantially substituted with an alkanolamine before the membrane formation, since the PPO having side chain modified with an alkanolamine according to the present invention is insoluble in any organic solvent to the inventors' knowledge and membrane formation itself becomes difficult. Therefore, it is preferred that the halogenated PPO membrane is prepared first and the PPO is then modified by treatment with an alkanolamine or a polyfunctional amine.

For example, the flat-sheet halogenated PPO membrane can be produced by applying a halogenated PPO dope solution onto a non-woven fabric composed of a material having excellent solvent resistance using a doctor blade and then immersing the non-woven fabric in a coagulation bath of a nonsolvent such as water. An example of material of the non-woven fabric includes polyethylene terephthalate, polyethylene, polypropylene and polyphenylene sulfide. The material of the non-woven fabric is preferably made of polyphenylene sulfide (PPS). PPS exhibits excellent solvent resistance as well as resistance to an alkali and an acid. A hollow fiber membrane can be produced by extruding a halogenated PPO dope solution from a coaxial tube nozzle with a bore fluid and then immersing them in a coagulation bath.

The conditions, such as the polymer concentration in the dope solution, the extrusion temperature, the temperature and composition of the coagulation bath and the line speed in the above-described membrane formation step, may be appropriately determined on the basis of public knowledge.

The resultant membrane is preferably dried to be substantially free of water by air-drying under ambient conditions, vacuum drying or the like. When the amount of water remaining in the membrane is large, the nucleophilic substitution reaction by an amine nucleophile described later may not sufficiently proceed in some cases.

The dried halogenated PPO membrane such as a flat-sheet membrane and a hollow fiber membrane is subjected to the nucleophilic substitution reaction by immersing the membrane in a solution containing an amine nucleophilie such as an alkanolamine and a polyfunctional amine. The halogeno group at the benzylic position of the halogenated PPO can be readily substituted with a nucleophilie. An example of a nucleophilie includes amine, cyanide ion, azide ion, hydroxide ion, phenolate and sulfinate. When a polyfunctional nucleophilie is used, a covalent cross-linkage can be introduced between PPO chains. The kind of the nucleophilie is preferably an amine, since an amine reacts readily. Primary, secondary and tertiary amines can be used. An alkanolamine is preferably used. Specifically, high solvent resistance can be given to the PPO membrane by the monoethanolamine represented by the chemical formula (3) or N-methylaminoethanol. Though the mechanism to exhibit solvent resistance by the substitution with an alkanolamine is not necessarily clear, the side chain substituted with the alkanolamines is the structure having extremely high hydrophilicity and a hydrogen bond can be readily formed between the molecules through the hydroxy groups. By contrast, the PPO backbone is a hydrophobic and rigid aromatic polymer. Since the molecular structure has hydrophilicity and hydrophobicity, the PPO may exhibit insolubility in organic solvents across a wide range solubility parameter. The resulting modified PPO membrane has good wettability, can be repeatedly dried and re-wetted without alcohol pre-wetting or the like, and can be preferably used in a preparation process of a thin-film composite membrane by interfacial polymerization or the like, owing to the high density of a side-chain hydroxy group.

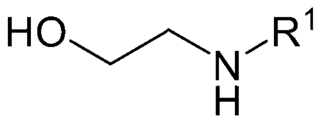

(3)

wherein $R^1$ is a hydrogen atom or a methyl group.

The modified polyphenylene oxide that constitutes the modified polyphenylene oxide separation membrane of the present invention comprises the following unit structure.

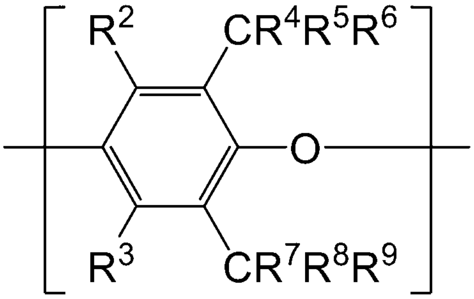

(4)

wherein

$R^2$ and $R^3$ are respectively a halogeno group or a hydrogen atom,
$R^4$ to $R^9$ are respectively a halogeno group, a hydrogen atom, an alkanolamino group: [-N($R^1$)$R^{10}$OH wherein $R^1$ has the same meaning as the above, and $R^{10}$ is a $C_{2-6}$ alkane-diyl group] or a functional amino group,
1 or more of $R^4$ to $R^9$ is an alkanolamino group.

The "$C_{2-6}$ alkane-diyl group" is a linear or branched divalent saturated aliphatic hydrocarbon group having the carbon number of 2 or more and 6 or less. An example thereof includes ethylene, n-propylene, methylethylene, n-butylene, methylpropylene, dimethylethylene, n-pentylene and n-hexylene. The $C_{2-6}$ alkane-diyl group is preferably a $C_{2-4}$ alkane-diyl group and more preferably ethylene.

The average number of alkanolamine substituent at the benzylic position per repeating unit in the modified polyphenylene oxide that constitutes the modified polyphenylene oxide separation membrane of the present invention is preferably 0.5 or more and 2.0 or less. When the average number is 0.5 or more, the solvent resistance of the polyphenylene oxide can be sufficiently improved. Conversely, since it may be difficult to introduce 3 or more alkanolamines per repeating unit, the average number is preferably 2.0 or less.

The mechanical strength is preferably improved, while the hydrophilicity imparted by the alkanolamine is maintained by partially introducing a polyfunctional amine component such as a diamine and a triamine as a covalently crosslinking component in addition to the alkanolamine. The structure of the diamine and triamine in such a case is not particularly restricted, and an alicyclic diamine such as piperazine, an aliphatic triamine such as diethylene triamine and an aromatic diamine such as phenylene diamine can be used. Primary, secondary and tertiary amines can be used as the amine. When the solvent resistance of the PPO membrane is improved by a covalently crosslinking component only, some problem may be caused. For example, the shrinkage of the volume and the pore size of the membrane may become more significant by the crosslinking to remarkably decrease the permeance of a solvent. When the PPO is excessively covalently crosslinked, the membrane may become brittle and prone to breaking, and the elongation may decrease, markedly decreasing the handling property in the case of a hollow fiber membrane. The polyfunctional amino group means the group formed by removing one hydrogen atom from the amino group of a polyfunctional amine.

The concentration of the alkanolamine and the polyfunctional amine as covalently crosslinking component for the nucleophilic substitution reaction may be appropriately adjusted and is preferably adjusted to 1 mass% or more and 10 mass% or less. A non-aqueous solvent in which the halogenated PPO membrane does not dissolve should be selected as the solvent. $S_N2$-type nucleophilic substitution reaction proceeds poorly in water. Preferably, methanol, acetonitrile and dimethylsulfoxide may be used. Methanol and acetonitrile are more preferred. The reaction time is preferably adjusted in the range of 1 hour or more and 24 hours or less. It is also preferred to carry out the reaction while refreshing the solution to improve the degree of substitution.

The modified PPO, i.e. m-PPO, after the nucleophilic substitution reaction may be directly used for separation, rinsed with methanol or pure water, or directly dried for storage. Since the membrane of the present invention exhibits high hydrophilicity, the membrane can be stored in a dry state and wetted with a desired solvent for a separation process as needed, or can be used as a support membrane of a composite membrane prepared by interfacial polymerization or the like.

The present application claims the benefit of the priority date of Japanese patent application No. 2023-132912 filed on August 17, 2023. All of the contents of the Japanese patent application No. 2023-132912 filed on August 17, 2023, are incorporated by reference herein.

EXAMPLES

The present invention is hereinafter described in more detail with examples, but the invention is not restricted to the examples.

Example 1: Production of modified polyphenylene oxide separation membrane

(1) Synthesis of halogenated (brominated) polyphenylene oxide

A 500 mL four-necked flask equipped with a reflux condenser, a nitrogen inlet and a mechanical stirrer was charged with 40 g of polyphenylene oxide ("181803" supplied from Sigma Aldrich), and 240 mL of chlorobenzene was added thereto under a nitrogen atmosphere to dissolve the PPO. When the mixture became a homogeneous transparent solution, predetermined amounts of N-bromosuccinimide and a radical initiator were added thereto. The temperature of the mixture was raised to 120°C while stirring vigorously, and the heating rate of the reaction mixture was controlled using an oil bath. The reaction was conducted for 6.5 hours while maintaining the temperature. The reaction mixture was allowed to cool naturally, and then 2 L of methanol was added thereto to precipitate flaky polymer. The polymer was finely crushed and thoroughly washed with additional methanol. Next, the polymer was dried at 60°C in vacuo to obtain powdery brominated polyphenylene oxide (BrPPO) polymer.

(2) Chemical structure characterization of brominated polyphenylene oxide

The chemical structure of the BrPPO polymer was analyzed using a nuclear magnetic resonance spectroscopy ($^{1}$H-NMR and $^{13}$C-NMR) under the following conditions.

Apparatus: Fourier transform nuclear magnetic resonance spectrometer ("AVANCE500" manufactured by Bruker Biospin)
Sample: 5 to 50 mg of the sample was dissolved in 1.0 mL of deuterated chloroform.

(3) Preparation of brominated polyphenylene oxide (BrPPO) flat-sheet membrane

NMP and polyethylene glycol having the molecular weight of 400 (PEG400) were added to a predetermined amount of BrPPO, and the mixture was stirred at 60°C for 6 hours to dissolve, thereby preparing membrane-forming solutions of various concentrations. The membrane-forming solution was defoamed under reduced pressure and then applied onto a polyphenylene sulfide (PPS) non-woven fabric having the width of 300 mm and the thickness of 120 μm using a doctor blade. The fabric was immersed in a water bath at the predetermined temperature for 10 minutes to induce coagulation. The fully coagulated membrane was thoroughly washed with water and then air-dried to obtain a BrPPO flat-sheet membrane (PPO precursor membrane). The membrane was cut into 48 mm-diameter discs for evaluation.

(4) Preparation of brominated polyphenylene oxide (BrPPO) hollow fiber membrane

NMP was added to a predetermined amount of the BrPPO polymer, and the mixture was stirred at 60°C for 6 hours to dissolve, thereby preparing the membrane-forming solution. The membrane-forming solution was defoamed under reduced pressure and then extruded with a 50% NMP aqueous solution as a bore fluid from a double-cylinder nozzle. Coagulation was carried out in a water bath at 40°C, and then the fiber was thoroughly washed with water. A predetermined number of the fibers were wound onto a take-up roller to form a fiber bundle. The cross-sectional dimension of the BrPPO hollow fiber membrane was adjusted to the outer diameter of 250 μm and the inner diameter of 150 μm. The number of fibers in the bundle was adjusted to 100. The ends of the air-dried bundle were loosened, inserted into a plastic sleeve, and embedded with a two-component epoxy resin. After the epoxy resin cured, the bonded ends were cut with a knife to expose the hollow membrane section as a permeate port.

(5) Modification of side chain of BrPPO membrane

The completely dried BrPPO flat-sheet and hollow fiber membranes were immersed in a 3 to 6 mass% solution of the predetermined amine nucleophile in methanol or acetonitrile at room temperature for a predetermined period to effect debromination and amine introduction via nucleophilic substitution reaction, thereby obtaining a modified polyphenylene oxide (m-PPO) membrane. The membrane was rinsed with methanol, and then air dried for storage until use.

(6) Evaluation of degree of modification of m-PPO membrane

The degrees of modification of the BrPPO membrane and the m-PPO membrane before and after immersion in the amine solution were measured by X-ray photoelectron spectroscopy (XPS). Although it is difficult to completely exclude the effects of residual solvents, additives and polymer-inherent impurities in XPS elemental composition analysis during membrane sormation, it was confirmed that the most of the bromines at benzylic position was substituted with the

amine, since the bromine content in all m-PPO membrane samples decreased by more than 80% compared with that before the reaction, and the amine-derived increased. The XPS analysis equipment and measurement conditions are as follows.

Instrument: K-Alpha+ manufactured by Thermo Fisher Scientific [Measurement conditions]
X-ray source: monochromatic Al Kα
X-ray setting: 12 kV, 2.5 mA
Photoelectron take-off angle: 90°
Spot size: ca. 200 μm diameter
Pass energy: 50 eV
Energy step size: 0.1 eV

Comparative example 1: Production of unmodified PPO membrane

Polyphenylene oxide (PPO, "181803" supplied from Sigma Aldrich) was dissolved in a mixed solvent of NMP and PEG400 at a polymer concentration of 25 mass% by stirring at 130°C, thereby preparing a membrane-forming solution. The membrane-forming solution was extruded from a double-cylinder nozzle with a 50 mass% NMP aqueous solution as a bore fluid at the nozzle temperature of 90°C and coagulated in a water bath at 40°C. Then, a hollow fiber membrane was obtained by washing with water and drying. The cross-sectional dimension of the hollow fiber membrane was adjusted to an outer diameter of 250 μm and an inner diameter of 150 μm.

Test example 1: Organic solvent resistance test

A 1 cm-square flat-sheet membrane 1 cm or a 1 cm-long hollow fiber membrane was immersed in various organic solvents for 24 hours at atmospheric temperature or at 100°C on a hot plate to evaluate the solvent resistance of the membrane based on the following criteria. When the boiling point of the solvent was less than 100°C, the temperature was adjusted to a temperature 10°C below the boiling point for the evaluation. The m-PPO membrane of Example 1, the unmodified PPO membrane of Comparative example 1 and a commercially available polyether sulfone membrane ("ASFIL025010MFPES" supplied from AS ONE) were tested. The result is shown in Table 1.

○: completely insoluble
x: remarkably swollen at room temperature and soluble at high temperature
××: soluble at room temperature

[Table 1]

| Solvent | Hansen solubility parameter | | | Organic solvent resistance | | |
|---|---|---|---|---|---|---|
| | δd | δp | δh | PPO membrane (Comparative ex.1) | PES membrane (commercial product) | m-PPO membrane (Ex.1) |
| | $MPa^{0.5}$ | | | | | |
| water | 15.5 | 16 | 42.3 | ○ | ○ | ○ |
| ethylene glycol | 17 | 11 | 26 | ○ | ○ | ○ |
| methanol | 14.7 | 12.3 | 22.3 | ○ | ○ | ○ |
| ethanol | 15.8 | 8.8 | 19.4 | ○ | ○ | ○ |
| 2-propanol | 15.8 | 6.1 | 16.4 | ○ | ○ | ○ |
| acetone | 15.5 | 10.4 | 7 | ○ | ○ | ○ |
| methyl ethyl ketone | 16 | 9 | 5.1 | ○ | ○ | ○ |
| acetornitrile | 15.3 | 18 | 6.1 | ○ | ○ | ○ |
| ethyl acetate | 15.8 | 5.3 | 7.2 | ○ | ○ | ○ |
| tetrahydrofuran | 16.8 | 5.7 | 8 | × | ○ | ○ |
| dimethyl sulfoxide | 18.4 | 16.4 | 10.2 | ○ | ×× | ○ |
| N-methyl-2-pyrrolidone | 18 | 12.3 | 7.2 | × | ×× | ○ |
| N,N-Dimethyl Acetamide | 16.8 | 11.5 | 9.4 | × | ×× | ○ |
| dimethyl formamide | 17.4 | 13.7 | 11.3 | × | ×× | ○ |
| chloroform | 17.8 | 3.1 | 5.7 | ×× | ×× | ○ |
| toluene | 18 | 1.4 | 2 | ×× | ○ | ○ |
| chlorobenzene | 19 | 4.3 | 2 | ×× | ○ | ○ |
| hexane | 14.9 | 0 | 0 | ○ | ○ | ○ |

A commercially available polyether sulfone membrane was found to be dissolved in certain organic solvents even at room temperature as shown in Table 1.

The unmodified PPO membrane of Comparative example 1 also exhibited insufficient organic solvent resistance, as the membrane dissolved in chlorobenzene, toluene and chloroform at room temperature, and swelled markedly at room temperature and dissolved at elevated temperature in tetrahydrofuran, N-methylpyrrolidone, dimethylformamide and dimethylacetamide.

By contrast, the modified PPO membrane of the present invention exhibited resistance to all of the organic solvents tested.

Example 2

(1) Preparation of brominated polyphenylene oxide (BrPPO) flat-sheet membrane

BrPPO was synthesized according to the method described in Example 1(1) above. The amount of N-bromosuccinimide added was 107 g, and 2.0 g of azobisisobutyronitrile was used as a radical initiator. The synthesized BrPPO was analyzed by NMR; as a result, the degree of halogenation (bromination) at the benzylic position, i.e. DBr, was 1.46, and the degree of halogenation (bromination) on the benzene ring, i.e. $DBr_2$, was 0.22.

A BrPPO flat-sheet membrane was then prepared using the synthesized BrPPO according to Example 1(3) above. The BrPPO polymer concentration in the membrane-forming solution was 25 mass%, and the temperature of the water bath was 40°C. The pure water permeance of the BrPPO membrane measured at 5 bar was 425 L/ ($m^2 \cdot h \cdot bar$).

Next, the completely dried membrane sample was immersed in a 3 mass% methanol solution of monoethanolamine (MEA) for 24 hours for side-chain modification. After the reaction the membrane was rinsed with methanol and air dried. The XPS analysis results before and after side-chain modification are shown in Table 2. It was found that a large proportion of benzylic halogen (bromine) was substituted with monoethanolamine, since the calculated and experimental value compositions of the BrPPO membrane (precursor membrane) and the m-PPO membrane (modified PPO membrane) were approximately consistent.

[Table 2]

| | Br (C-Br) | N | C | O |
|---|---|---|---|---|
| BrPPO (Calculation) | 15.7 | 0.0 | 74.9 | 9.4 |
| BrPPO (Experiment) | 12.8 | 1.1 | 73.7 | 12.5 |
| m-PPO (Calculation, 100%-substitution) | 1.5 | 9.7 | 72.5 | 16.3 |
| m-PPO (Experiment) | 2.4 | 7.9 | 73.5 | 16.2 |

* The calculated value of BrPPO is based on DBr=1.46 and DBr2=0.22 by NMR analysis.
The calculated value of m-PPO is based on the assumption that all of the bromo at the benzylic position is substituted with amine.

Example 3

A BrPPO hollow fiber membrane was prepared according to the method described in Example 1(4) above. The same BrPPO polymer as in Example 2 was used, and a membrane-forming solution having a polymer concentration of 25 mass% was prepared. The membrane-forming solution was extruded with a 50 mass% NMP aqueous solution as a bore fluid from a double-cylinder nozzle. Coagulation was carried out in a water bath at 40°C, and the fiber was washed with water and dried to prepare a hollow fiber membrane. The cross-sectional dimension of the hollow fiber membrane was adjusted to an outer diameter of 250 μm and an inner diameter of 150 μm. The completely dried membrane sample was immersed in a 3 mass% methanol solution of monoethanolamine (MEA) for 24 hours for side-chain modification. After the reaction, the membrane was rinsed with methanol and dried in vacuo.

Example 4

A flat-sheet membrane was prepared similarly to Example 2 except that the BrPPO polymer concentration was adjusted to 32 mass% and the temperature of the water bath was adjusted to 20°C. In addition, the side chain was modified under the same conditions as in Example 2.

An asymmetric nanofiltration membrane having a dense skin layer on the membrane surface was prepared using the high concentration BrPPO polymer solution in Example 4.

Example 5

BrPPO was synthesized similarly to Example 2 except that 170 g of N-bromosuccinimide and 2.0 g of azobisisobutyronitrile as a radical initiator were used. NMR analysis of the BrPPO showed that the degree of halogenation (bromination) at the benzylic position, i.e. DBr, was 1.94, and the degree of halogenation (bromination) on the benzene ring, i.e. $DBr_2$, was 0.36. A flat-sheet membrane was prepared similarly to Example 2.

Example 6

BrPPO was synthesized similarly to Example 2 except that 60 g of N-bromosuccinimide and 2.0 g of azobisisobutyronitrile as a radical initiator were used. NMR analysis of the BrPPO showed that the degree of halogenation (bromination) at the benzylic position, i.e. DBr, was 0.74, and the degree of halogenation (bromination) on the benzene ring, i.e. $DBr_2$, was 0.11. A flat-sheet membrane was prepared similarly to Example 2 except that the reaction solvent for MEA was changed from methanol to acetonitrile.

Example 7

A flat-sheet membrane was prepared similarly to Example 4 except that N-methylaminoethanol (NMAE) was used as the alkanolamine.

An asymmetric nanofiltration membrane having a dense skin layer on the membrane surface was prepared using a high concentration BrPPO polymer solution in Example 7.

Example 8

A flat-sheet membrane was prepared similarly to Example 2 except that a 3 mass% methanolic reaction solution prepared by mixing MEA as an alkanolamine and piperazine (PIP) as a diamine at a weight ratio of 95:5 was used as the reaction solution.

Example 9

A flat-sheet membrane was prepared similarly to Example 2 except that a methanol solution having a concentration of 3 mass% prepared by mixing MEA as an alkanolamine and piperazine (PIP) as a diamine in the mass ratio of 80:20 was used as the reaction solution.

Example 10

A flat-sheet membrane was prepared similarly to Example 1 except that a methanol solution having a concentration of 3 mass% prepared by mixing MEA as an alkanolamine and diethylene triamine (DETA) as a diamine in the mass ratio of 95:5 was used as the reaction solution.

Comparative example 2: Production of unmodified BrPPO membrane

BrPPO was synthesized and an unmodified BrPPO flat-sheet membrane was prepared similarly to Example 2 except that 35 g of N-bromosuccinimide and 2.0 g of azobisisobutyronitrile as a radical initiator were used. The BrPPO was analyzed by NMR; as a result, the degree of halogenation (bromination) at the benzylic position, i.e. DBr, was 0.42, and the degree of halogenation (bromination) on the benzene ring, i.e. $DBr_2$, was 0.05. A flat-sheet membrane was prepared similarly to Example 2.

Comparative example 3: Production of PIP modified PPO membrane

A PIP-modified PPO membrane was prepared similarly to Example 2 except that covalent crosslinking was introduced using only PIP as the amine.

The constitution of the membranes of Examples 2 to 10 and Comparative examples 1 to 3 are summarized below.

[Table 3]

| | Bromination degree at benzylic position DBr | Bromination degree on benzene ring DBr2 | Amination at benzylic position | | | Membrane morphology |
|---|---|---|---|---|---|---|
| | | | Alkanol amine | Polyfunctional amine (additive rate%) | Reaction solvent | |
| Ex.2 | 1.46 | 0.22 | MEA | - | MeOH | flat |
| Ex.3 | 1.46 | 0.22 | MEA | - | MeOH | hollow fiber |
| Ex.4 | 1.46 | 0.22 | MEA | - | MeOH | flat |
| Ex.5 | 1.94 | 0.36 | MEA | - | MeOH | flat |
| Ex.6 | 0.74 | 0.11 | MEA | - | MeCN | flat |
| Ex.7 | 1.46 | 0.22 | NMAE | - | MeOH | flat |
| Ex.8 | 1.46 | 0.22 | MEA | PIP (5%) | MeOH | flat |
| Ex.9 | 1.46 | 0.22 | MEA | PIP (20%) | MeOH | flat |
| Ex.10 | 1.46 | 0.22 | MEA | DETA (5%) | MeOH | flat |
| Comparative Ex.1 | 0 | 0 | - | - | - | hollow fiber |
| Comparative Ex.2 | 1.46 | 0.22 | - | - | - | flat |
| Comparative Ex.3 | 1.46 | 0.22 | - | PIP | MeOH | flat |

MEA monoethanolamine
NMAE N-methylaminoethanol
PIP piperazine
DETA diethylenetriamine
MeOH methanol
MeCN acetonitrile

Test example 2: Separation test in aqueous system

The flat-sheet membranes and the hollow fiber membranes of Examples 2 to 10 and Comparative examples 1 to 3 were sufficiently wetted with water, and the performance thereof was evaluated using an apparatus containing a stainless steel pressure-resistant container, a feed-water tank and a pump.

(1) Measurement of NaCl rejection

The sodium chloride (NaCl) rejection of the modified PPO membranes of Examples 4 and 7, intended for use as a nanofiltration membrane was measured. By contrast, the NaCl rejection of the other membranes was not measured, since the other membranes were intended as a base material for an ultrafiltration membrane.

An aqueous solution with a concentration of 1500 mg/L was supplied at 25°C at a pressure of 15 bar for 1 hour. Then, the solution permeated through the membrane was collected, and the weight of the permeated solution was measured using an electronic balance. The weight of the permeated solution was converted to the volume of the permeated solution at 25°C according to the following formula.

Volume of permeated solution (L) = weight of permeated solution (kg)/0.99704 (kg/L)

In addition, the volume of the permeated liquid per unit time, unit membrane area and unit pressure is represented as Permeance A. The Permeance A of water was measured using pure water at a pressure of 5 bar or 15 bar and was calculated by the following formula.

A [L/($m^2$·h·bar)] = volume of permeated solution [L]/membrane area [$m^2$]/collection time [h]/measurement pressure [bar]

The NaCl rejection was evaluated as follows. The conductivities of the solution permeated through the membrane collected in the above-described permeated solution volume measurement and the supplied solution were measured using an electrical conductivity meter ("CM-25R" manufactured by DKK-TOA). The rejection was calculated by

the following formula. The result is shown in Table 4.

NaCl rejection [%] = (1 - conductivity of solution permeated through membrane [uS/cm]/conductivity of supplied solution [$\mu$S/m]) $\times$ 100

(2) Measurement of PEG rejection

The neutral molecule rejection in an aqueous system was evaluated using polyethylene glycol (PEG). PEG having a molecular weight of 400 manufactured by FUJIFILM Wako Pure Chemical was used, and the pressure of the PEG solution was adjusted to 15 bar in the case of the modified PPO membranes of Examples 4 and 7 intended for use as a nanofiltration membrane, and PEG having a molecular weight of 300,000 manufactured by FUJIFILM Wako Pure Chemical was used and the pressure of the PEG solution was adjusted to 5 bar in the case of the other membranes intended as a base material for an ultrafiltration membrane.

An aqueous solution having a PEG concentration of 200 mg/L was supplied at 25°C for 1 hour, and then the solution permeated through the membrane was collected. The concentrations in the supplied solution and the permeated solution were measured using a total organic carbon analyzer ("ON-LINE TOC-VCSH" manufactured by SIMADZU), and the PEG rejection was calculated by the following formula. The result is shown in Table 4.

PEG rejection [%] = 100 $\times$ [1 - (PEG concentration of permeated solution)/(PEG concentration of supplied solution)]

Test example 3: Wettability test of membrane

Pure water was added dropwise on the surface of the completely dried flat-sheet membrane and hollow fiber membrane to confirm whether the membrane surface was spontaneously wetted or not and whether capillary infiltration of water into the membrane took place or not. The case where the membrane was wetted and infiltration took place was judged as wettable (O), and the case where a droplet having a contact angle was observed on the membrane surface was judged as not wettable ($\times$).

Test example 4: Permeance test of membrane in organic solvent system

The flat-sheet membrane and the hollow fiber membrane were thoroughly washed with NMP and installed in a stainless-steel pressure-resistant container sealed with a sealing material made of FFKM. An organic solvent was supplied to the pressure-resistant container from a 500 mL HPLC screw-cap bottle using an HPLC fraction collection pump for the evaluation. The pressure for measuring the permeance A of a solvent was adjusted to 0.5 bar, and the permeance A was calculated by the following formula. Asymmetric nanofiltration membranes on which a dense surface layer was formed were prepared in Examples 4 and 7 using a high-concentration BrPPO polymer solution of 32 mass%. Thus, the pressure was adjusted to 15 bar for the membranes of Examples 4 and 7, since the amounts of the filtrated liquid were smaller than those of the other membranes. The result is shown in Table 4.

A [L/($m^2 \cdot h \cdot bar$)] = permeated liquid volume [L]/membrane area [$m^2$]/collection time [h]/measurement pressure [bar]

Test example 5: Pressure resistance test of membrane in organic solvent

The pressure resistance was evaluated as the ratio of $A_{2.0}/A_{1.0}$ wherein $A_{2.0}$ was the permeance A in the case where an NMP solvent was filtrated through the membrane at a pressure of 2 bar, and $A_{1.0}$ was the permeance A in the case where the pressure was 1 bar in the permeance test of an m-PPO membrane. The result is shown in Table 4. The modified PPO membranes of Examples 4 and 7 intended for use as an ultrafiltration membrane were not tested.

Test example 6: Separation performance test of membrane in organic solvent

The separation performance of the modified PPO membranes of Examples 4 and 7 intended for use as an ultrafiltration membrane in an organic solvent was evaluated. The separation performance of the other membranes intended as a base material for an ultrafiltration membrane was not evaluated.

Diol-type polypropylene glycol (PPG400) manufactured by FUJIFILM Wako Pure Chemical was used as the marker for the separation test of a membrane in NMP. The system was operated at 25°C at a pressure of 15 bar for 6 hours until steady-state, and then the liquid permeated through the membrane was collected. The peaks of PPG400 in the supplied liquid and the permeated liquid were analyzed by high-performance liquid chromatography (HPLC), and the rejection of PPG400 was calculated based on the area ratio of the peak apex molecular weight component before and after

permeation. The result is shown in Table 4.

Rejection [%] = 100 × [1 - (peak area of peak apex molecular weight component in permeated liquid)/(peak area of peak apex molecular weight component in supplied liquid)]

The measurement conditions of HPLC are hereinafter described.

[HPLC conditions]

System: Thermo Fisher Scientific Vanquish
Column: Waters BEH C18 2.1 × 150 mm
Mobile phase: A: pure water, B: acetonitrile
0 min (5% B) 15 (60) 20 (100) 25 (100)
Flow rate: 0.25 mL/min
Column temperature: 40°C
Injection amount: 5 μL
Detection: Charged Aerosol Detector (CAD)
Drying tube temperature: 35°C

Test example 7: Alkali resistance and acid resistance test of m-PPO membrane (modified PPO membrane)

The m-PPO flat-sheet membrane sample was immersed in 100 mL of 1 mol/L sodium hydroxide (NaOH) and hydrochloric acid (HCl) solutions respectively for one week with the solution replaced daily. Then, the resistance was compared by performing a PEG fractionation test in an aqueous system.

[Table 4]

| | PPO precursor membrane | m-PPO membrane (modified PPO membrane) | | | | | | | |
|---|---|---|---|---|---|---|---|---|---|
| | Pure water permeability | Pure water permeability | NaCl rejection | PEG rejection Mw=400 | PEG rejection Mw=300k | Wettability of dried membrane | NMP rejection A | NMP pressure resistance | PPG400 rejection in NMP |
| | $L/(m^2 \cdot h \cdot bar)$ | $L/(m^2 \cdot h \cdot bar)$ | % | % | % | | $L/(m^2 \cdot h \cdot bar)$ | $A_{2.0}/A_{0.5}$ | % |
| Ex.2 | 425 | 390 | - | - | 93 | ○ | 145 | 0.96 | |
| Ex.3 | 480 | 460 | - | - | 96 | ○ | 182 | 0.97 | - |
| Ex.4 | 4.4 | 3.2 | 68 | 98 | - | ○ | 0.40 | - | 95 |
| Ex.5 | 620 | 580 | - | - | 95 | ○ | 270 | 0.99 | - |
| Ex.6 | 386 | 380 | - | - | 93 | ○ | 110 | 0.80 | - |
| Ex.7 | 6.8 | 4.1 | 62 | 96 | - | ○ | 0.15 | - | 92 |
| Ex.8 | 425 | 208 | - | - | 95 | ○ | 76 | 1.00 | - |
| Ex.9 | 425 | 114 | - | - | 94 | ○ | 42 | 0.99 | - |
| Ex.10 | 425 | 210 | - | - | 95 | ○ | 77 | 0.99 | - |
| Comparative Ex.1 | 280 | - | - | - | 95 | × | dissolved | dissolved | - |
| Comparative Ex.2 | 415 | - | - | - | 90 | × | dissolved | dissolved | - |
| Comparative Ex.3 | 425 | 0 | - | - | - | × | 0 | - | - |

When the unmodified PPO dried membrane of Comparative example 1 was immersed in NMP at atmospheric temperature, the membrane was remarkably swollen. Thus, the performance of the membrane in an organic solvent could not be evaluated. The membrane of Comparative example 1 was an unmodified PPO membrane, but its wettability to water was entirely insufficient.

When the unmodified BrPPO membrane of Comparative example 2 was immersed in NMP, the membrane was also remarkably swollen. Thus, it was difficult to evaluate the performance of the membrane in an organic solvent. The wettability of the unmodified BrPPO membrane of Comparative example 2 to water was also entirely insufficient.

The wettability of the membrane of Comparative example 3 in which MEA was not introduced and only piperazine (PIP) was introduced was tested; as a result, the membrane was not spontaneously wetted, and thus the wettability was evaluated as x:poor. Its handling property was low, since the membrane needed to be wetted with ethanol or the like to

allow water to permeate through the membrane.

The wettability of the dried m-PPO membrane (modified PPO membrane) of Example 2 was tested; as a result, the membrane was spontaneously wetted, and thus the wettability was evaluated as O:good. The dried membrane was immersed in pure water for 30 minutes, and then pure water permeance was measured at 5 bar. The pure water permeance was 390 L/($m^2$·h· bar), and thus it was confirmed that the permeance was not significantly impaired before and after the side chain modification treatment and natural drying. The rejection of PEG300k in the aqueous separation test was 93%, and the membrane was a porous membrane comparable to an ultrafiltration (UF) membrane. Next, the solvent was exchanged for NMP by immersing the membrane in NMP for 2 hours, and then the NMP permeance was measured using a flat-sheet membrane evaluation cell. As a result, the NMP permeance was 145 L/($m^2$· h·bar). The pressure resistance in NMP was good as the ratio of the permeabilities at the pressure of 0.5 bar and 2.0 bar, i.e. $A_{2\cdot 0}/A_{0.5}$, was 0.96.

The results of the permeance test of the membrane of Example 2 in the solvents other than NMP are shown in Figure 1. The solvent permeabilities were measured while sequentially replacing the solvents, specifically water, NMP, ethanol, toluene, methanol and toluene, and again water, of which solubility parameters differ greatly. As a result, the membrane exhibited good permeance for all of the solvents. When the solvent was exchanged for water again, the permeance was hardly different from the initial permeance. Thus, it was suggested that the membrane structure did not undergo any irreversible changes upon solvent exchange.

It was found that the hollow fiber membrane of Example 3 can be utilized for the separation in the presence of an organic solvent, since the hollow fiber membrane exhibits excellent organic solvent resistance in addition to excellent wettability.

The NaCl rejection of the m-PPO membrane of Example 4 in an aqueous system was 68%, and the PEG400 rejection thereof was 98%. Thus, it was found that the m-PPO membrane of Example 4 has a fractionation property comparable to that of a nanofiltration (NF) membrane. In addition, it was found that the membrane exhibits excellent NF membrane performance even in NMP, since the NMP permeance thereof was 0.4 L/($m^2$·h·bar) and the PPG400 rejection in NMP was 95%.

Further, an NF membrane-level m-PPO membrane sample of Example 4 was separately prepared, and 1 M NaOH aqueous solution and 1 M HCl aqueous solution were prepared. The sample was immersed in the solutions for 1 week, and then a separation test of PEG400 in the aqueous system was conducted. It was found that the m-PPO membrane is excellent in chemical resistance, specifically alkali resistance and acid resistance, since the PEG400 rejections before and after the immersion in any cases were 97 to 98% and the separation performance hardly changed.

A UF membrane-level m-PPO membrane could be produced in Example 5 similarly to Example 2, and the pressure resistance thereof in NMP was also good.

When Example 6 was compared with Example 2, the decrease in permeance and pressure resistance in NMP was observed but solvent resistance was good. Such slight performance decrease might be caused by the decrease of the hydrogen bond between MEA molecules, since the amine substitution degree at the benzylic position of m-PPO was decreased.

Since the NMP permeance of the flat-sheet membrane produced by using N-methylaminoethanol (NMAE) as MEA in Example 7 was 0.15 L/ ($m^2$·h·bar) and the rejection of PPG400 in NMP was 92%, it was confirmed that the m-PPO membrane produced by using NMAE has excellent NF membrane performance in NMP.

The 3 mass% methanol solution prepared by mixing MEA as an alkanolamine and piperazine (PIP) as a diamine in the weight ratio of 95:5 was used in Example 8, and a UF membrane-level m-PPO membrane could be produced in Example 8 similarly to Example 2. It is noteworthy that the pressure resistance was improved as $A_{2.0/}A_{0.5}$ was 1.0.

The 3 mass% methanol solution prepared by mixing MEA as an alkanolamine and PIP as a diamine in the mass ratio of 80:20 was used in Example 9, and the 3 mass% methanol solution prepared by mixing MEA as an alkanolamine and diethylenetriamine (DETA) as a diamine in the mass ratio of 95:5 was used in Example 10. In particular, pressure resistance was good in Example 9 and Example 10 similarly to Example 8.

INDUSTRIAL APPLICABILITY

The present invention has industrial applicability, since the present invention can provide a separation membrane having excellent organic solvent resistance, acid resistance and alkali resistance.

## Claims

**1.** A modified polyphenylene oxide separation membrane,

wherein one or more benzylic positions at the 2- and/or 6-positions of a polyphenylene oxide precursor membrane are substituted with a halogeno group, and

all or a part of the halogeno group is substituted with an alkanolamine.

2. The modified polyphenylene oxide separation membrane according to claim 1, wherein the halogeno group is bromo.

3. The modified polyphenylene oxide separation membrane according to claim 1, wherein the alkanolamine is a monoethanolamine represented by the chemical formula (3):

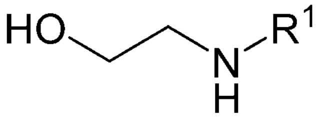

(3)

wherein $R^1$ is a hydrogen atom or a methyl group.

4. The modified polyphenylene oxide separation membrane according to claim 1, wherein all or a part of the halogeno group is substituted with the alkanolamine and a polyfunctional amine.

5. The modified polyphenylene oxide separation membrane according to claim 4, wherein the polyfunctional amine is one or more selected from the group consisting of an alicyclic diamine, an aliphatic triamine and an aromatic diamine.

6. A method for producing a modified polyphenylene oxide separation membrane,

the method comprising the step of immersing a precursor membrane composed of a halogenated polyphenylene oxide in a reaction solution to substitute all or a part of a halogeno group at a benzylic position at the 2- and/or 6-positions of the halogenated polyphenylene oxide with an alkanolamine,
wherein the reaction solution is prepared by dissolving the alkanolamine in an organic solvent, and
the precursor membrane is insoluble in the organic solvent.

7. The method for producing a modified polyphenylene oxide separation membrane according to claim 6, wherein

the precursor membrane composed of the halogenated polyphenylene oxide is immersed in the reaction solution to substitute all or a part of the halogeno group at the benzylic position at the 2- and/or 6-positions of the halogenated polyphenylene oxide with the alkanolamine and a polyfunctional amine,
the reaction solution is prepared by dissolving the alkanolamine and the polyfunctional amine in the organic solvent, and
the precursor membrane is insoluble in the organic solvent.

8. The method for producing a modified polyphenylene oxide separation membrane according to claim 6 or 7, wherein the organic solvent is methanol or acetonitrile.

[Figure 1]

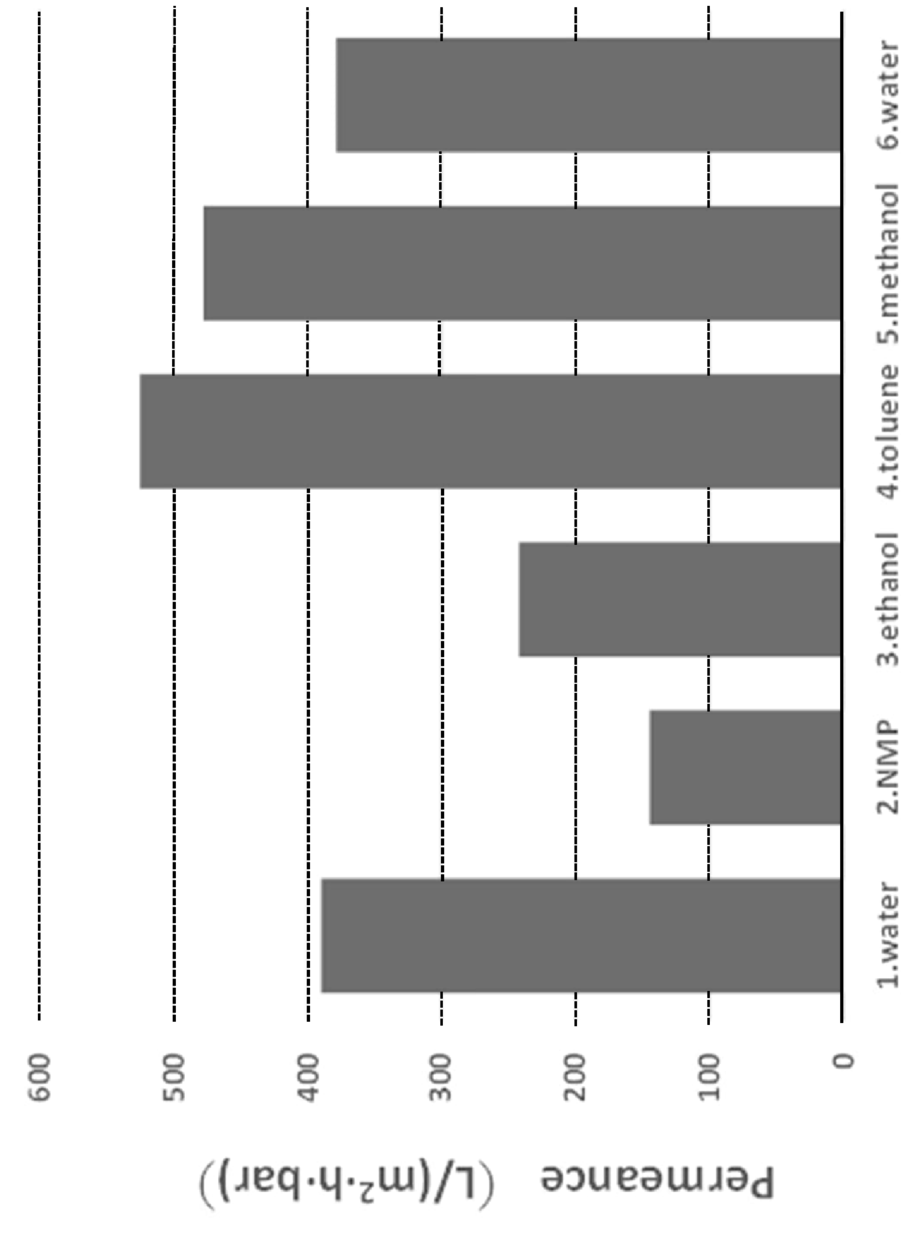
Permeance (L/(m²·h·bar))
600
500
400
300
200
100
0
1.water
2.NMP
3.ethanol
4.toluene
5.methanol
6.water

**INTERNATIONAL SEARCH REPORT**

International application No.
**PCT/JP2024/024171**

**A. CLASSIFICATION OF SUBJECT MATTER**

***B01D 71/52***(2006.01)i; ***C08G 65/48***(2006.01)i
FI: B01D71/52; C08G65/48

According to International Patent Classification (IPC) or to both national classification and IPC

**B. FIELDS SEARCHED**

Minimum documentation searched (classification system followed by classification symbols)

B01D53/22, B01D61/00 - 71/82, C02F1/44, C08G65/00 - 67/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 05-140298 A (TOKUYAMA SODA KK) 08 June 1993 (1993-06-08)<br>entire text | 1-8 |
| A | JP 59-115738 A (SUMITOMO ELECTRIC INDUSTRIES, LTD.) 04 July 1984 (1984-07-04)<br>entire text | 1-8 |
| A | JP 06-093114 A (HOECHST AKTIENGESELLSCHAFT) 05 April 1994 (1994-04-05)<br>entire text | 1-8 |
| A | JP 2012-501830 A (EXXONMOBIL RESEARCH AND ENGINEERING COMPANY) 26 January 2012 (2012-01-26)<br>entire text | 1-8 |
| A | US 2008/0312349 A1 (GENERAL ELECTRIC COMPANY) 18 December 2008 (2008-12-18)<br>whole document | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2024/024171**

**C. DOCUMENTS CONSIDERED TO BE RELEVANT**

| Category* | Citation of document, with indication, where appropriate, of the relevant passages | Relevant to claim No. |
|---|---|---|
| A | CN 115948096 A (HUBAO NEW MATERIAL TECHNOLOGY (SHANGHAI) CO., LTD.) 11 April 2023 (2023-04-11)<br>whole document | 1-8 |

Form PCT/ISA/210 (second sheet) (July 2022)

**INTERNATIONAL SEARCH REPORT**
**Information on patent family members**

International application No.
**PCT/JP2024/024171**

| Patent document cited in search report | Publication date (day/month/year) | Patent family member(s) | Publication date (day/month/year) |
|---|---|---|---|
| JP 05-140298 A | 08 June 1993 | (Family: none) | |
| JP 59-115738 A | 04 July 1984 | US 4832713 A<br>whole document<br>EP 113574 A2<br>whole document | |
| JP 06-093114 A | 05 April 1994 | US 5561202 A<br>whole document<br>EP 574791 A2<br>whole document | |
| JP 2012-501830 A | 26 January 2012 | US 2010/0059441 A1<br>whole document<br>WO 2010/030357 A2<br>whole document<br>EP 2349545 A2<br>whole document | |
| US 2008/0312349 A1 | 18 December 2008 | WO 2008/103599 A2<br>whole document | |
| CN 115948096 A | 11 April 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5578300 B
- JP 2023132912 A